# EUROPÄISCHE PATENTANMELDUNG

(11) **EP 3 685 936 A1**
(43) Veröffentlichungstag der Anmeldung: **29.07.2020**
(21) Anmeldenummer: 19153042.7
(22) Anmeldetag: 22.01.2019
(51) Int. Cl.: B22C 9/06, B22C 3/00, B29C 33/56

(54) **GUSSFORM MIT ELASTISCHER TRENNSCHICHT**

(71) Anmelder: Bajerke Flaig Ruf GbR, 78462 Konstanz (DE)
(72) Erfinder: FLAIG, Adrian, 78467 Konstanz (DE); BAJERKE, Marcel, 78467 Konstanz (DE); RUF, Philipp, 78462 Konstanz (DE)
(74) Vertreter: Grünecker Patent- und Rechtsanwälte PartG mbB

(57) **Zusammenfassung**

Die Erfindung betrifft eine Gussform 1 mit einer elastischen Trennschicht 9, deren Innenseite ein Negativ wenigstens eines Bereichs einer äußeren Form eines Gussteils 17 bereitstellt, und einer Schalung 2 mit mehreren relativ zueinander beweglichen Schalungsteilen 3, 4, 5, 6, wobei die elastische Trennschicht 9 an wenigstens zwei der Schalungsteilen 3, 4, 5, 6 befestigt ist. Die Schalungsteile 3, 4, 5, 6 stützen in einer ersten Anordnung die Außenseite der elastischen Trennschicht 9, und ermöglichen in einer zweiten Anordnung ein Auswerfen des Gussteils 17. Die Erfindung betrifft weiterhin ein Verfahren zum Herstellen einer Gussform 1 und ein Verfahren zum Herstellen eines Gussteils 17.

## Beschreibung

Die vorliegende Erfindung betrifft eine Gussform mit einer elastischen Trennschicht, deren Innenseite ein Negativ wenigstens eines Bereichs einer äußeren Form eines Gussteiles bereitstellt. Die Erfindung betrifft weiterhin ein Verfahren zum Herstellen einer Gussform sowie ein Verfahren zum Herstellen eines Gussteils.

Die Herstellung von komplex geformten Gießteilen stellt hohe Erfordernisse an die jeweilige Gussform und ist insbesondere bei Bauteilen, die nur in kleinen Serien hergestellt werden, äußerst kostspielig.

Im Stand der Technik wurden verschiedene Vorrichtungen und Verfahren vorgeschlagen, die das Gießen mit elastischen Formen betreffen. So ist aus der US 2012/0231105 A1 eine elastische Form bekannt. Weiterhin ist es im Stand der Technik bekannt, dass starre Kerne und darüber angeordnete flexible Formen zum Einsatz kommen können, beispielsweise aus der US 2016/151958 A1 und WO 2014/099841 A1. Als Alternative zu elastischen Formen sind beispielsweise aus der WO 2012/175323 A1 Gießformen bekannt, deren einzelne Segmente bei der Herauslösung der Gießteile abgeschält werden können.

Außerdem ist im Stand der Technik bekannt, dass Schalungen vorgesehen werden, in denen ein Urmodell angeordnet wird, wobei der Zwischenraum zwischen Schalung und Urmodell mit Silikon ausgegossen wird. Der die Gießform bildende Silikonblock kann dann in mindestens zwei Formhälften getrennt werden, um das Urmodell zu entfernen. Die so entstandene Form kann mit einem Gusswerkstoff befüllt werden, um ein Gussteil herzustellen. Bei der Entformung von Gussteilen mit Hinterschnitten treten allerdings hohe Spannungsspitzen im Silikonwerkstoff auf, sodass die Form beschädigt, und nur begrenzt wiederverwendet werden kann. Dies gilt insbesondere, da relativ harte Silikonwerkstoffe verwendet werden müssen, wenn keine formgebende Schalung oder Stützstruktur vorhanden ist. Weiter gilt dies insbesondere für Gießteile, die komplexe Formen, insbesondere mit Hinterschnitten, aufweisen, da deren Entformung entsprechend schwierig ist.

Deswegen wurde im Stand der Technik vorgeschlagen, dass eine stützende Schalung an die Form des Gussteils bzw. Urmodells angepasst wird, um eine dünnere Silikonform bereitzustellen. Dies hat aber den Nachteil, dass die Silikonform beim Entformen noch schneller beschädigt werden kann, insbesondere im Bereich von Hinterschnitten. Die Schalung kann aus mehreren Teilen bestehen, um die Silikonform einfacher aus der Schalung entnehmen zu können.

Es ist die Aufgabe der Erfindung eine Gussform, ein Verfahren zu deren Herstellung und ein Verfahren zum Herstellen eines Gussteils bereitzustellen, die ein betriebssicheres, ökonomisches und insbesondere automatisierbares Herstellen eines Gussteils ermöglichen.

Erfindungsgemäß wird eine Gussform mit einer elastischen Trennschicht bereitgestellt, deren Innenseite ein Negativ wenigstens eines Bereichs einer äußeren Form eines Gussteils bereitstellt, und mit einer Schalung mit mehreren relativ zueinander beweglichen Schalungsteilen, wobei die elastische Trennschicht an den Schalungsteilen befestigt ist. In einer ersten Anordnung stützen die Schalungsteile die Außenseite der elastischen Trennschicht, und in einer zweiten Anordnung ermöglichen die Schalungsteile ein Auswerfen des Gussteils, insbesondere indem die Trennschicht aufgeweitet wird.

Dies ermöglicht, dass eine relativ dünne elastische Trennschicht vorgesehen werden kann, was die Kosten für die Herstellung der Gussform erheblich reduzieren kann. Zudem kann die dünne elastische Trennschicht einfacher beim Auswerfen des Gussteils verformt werden, sodass auch eine Herstellung von Gussteilen mit Hinterschneidungen ermöglicht wird. Zudem kann durch die Befestigung der elastischen Trennschicht an den Schalungsteilen eine gezielte und vorteilhafte Krafteinleitung auf die elastische Trennschicht erfolgen, sodass Spannungsspitzen in kritischen Bereichen vermieden werden können, und die elastische Trennschicht - selbst wenn sie dünn ausgestaltet ist - eine erheblich längere Einsatzzeit aufweist. Die Dicke der elastischen Trennschicht hängt insbesondere von der Größe des Gussteils bzw. der Gussform ab. Vorteilhafterweise hat die elastische Trennschicht aber eine Dicke von weniger als 50 mm (Millimeter), weniger als 20 mm, weniger als 5 mm, weniger als 2 mm oder sogar weniger als 1 mm. Die Schalung weist wenigstens zwei relativ zueinander bewegliche Schalungsteile auf, kann aber auch drei, vier, fünf, sechs, oder mehr relativ zueinander bewegliche Schalungsteile aufweisen. Die elastische Trennschicht ist wenigstens mit zwei Schalungsteilen an jeweils wenigstens einem Befestigungspunkt pro Schalungsteil befestigt. Dies bedeutet, dass eine Bewegung der Schalungsteile relativ zueinander zu einer Verformung der elastischen Trennschicht führt, die ein Auswerfen des Gussteils ermöglichen kann.

Insbesondere sind die Schalungsteile in der ersten Anordnung näher zueinander angeordnet als in der zweiten Anordnung. Dies kann dadurch erreicht werden, dass die Schalungsteile translatorisch relativ zueinander bewegbar sind und/oder dass die Schalungsteile relativ zueinander verdrehbar sind. Insbesondere wird ein zumindest bereichsweiser Abstand zwischen den Schalungsteilen in der zweiten Anordnung geschaffen. Durch die Befestigung der elastischen Trennschicht an den Schalungsteilen wird eine Verformung der elastischen Trennschicht in der zweiten Anordnung gegenüber der ersten Anordnung bewirkt. Zudem kann durch die Bewegung der elastischen Schalungsteile bereichsweise oder insgesamt die Stützung der Außenseite der elastischen Trennschicht aufgehoben werden, sodass die elastische Trennschicht zum Auswerfen des Gussteils zumindest in diesem Bereich verformt werden kann.

Vorteilhafterweise ist die elastische Trennschicht aus einem der Werkstoffe Silikon, Gelatine, Naturkautschuk, Ethylen-Propylen-Dien-Kautschuk, Chloropren-Kautschuk oder Styrol-Butadien-Kautschuk, gefertigt. Diese Werkstoffe ermöglichen eine vorteilhafte Verformbarkeit der Trennschicht und dennoch ausreichende Stabilität.

Die Schalungsteile bestehen vorteilhafterweise aus einem starren Material, wobei insbesondere thermoplastische Kunststoffe, duroplastische Kunststoffe, aber auch Metalle sowie anorganische nichtmetallische Werkstoffe, wie z.B. Verbundwerkstoffe, zum Einsatz kommen können.

Vorteilhafterweise ist ein Auswerfmechanismus vorgesehen, mit dem die Schalungsteile von der ersten Anordnung in die zweite Anordnung bewegt werden können. Insbesondere handelt es sich beim Auswerfmechanismus um ein Getriebe, das eine vorgegebene Bewegung der wenigstens zwei Schalungsteile relativ zueinander vorgibt. Zusätzlich oder alternativ kann der Auswerfmechanismus ein Auswerfelement aufweisen, das lokal in Kontakt mit dem Gussteil oder der elastischen Trennschicht bringbar ist, um dieses bzw. diese zu bewegen und den Auswerfprozess zu unterstützen. Insbesondere kann es sich dabei um einen Auswerfbolzen handeln.

In einer Ausführungsform umfasst die Gussform ein Getriebe oder Fördermittel, mit dem die Schalungsteile an jeweils unterschiedlichen Befestigungspunkten wenigstens temporär verbunden sind, sodass bei einer Veränderung der relativen Anordnung oder Orientierung der Befestigungspunkte ein relatives Bewegen der Schalungsteile bewirkt wird. Das Getriebe oder Fördermittel bildet somit einen Auswerfmechanismus. Die wenigstens eine Verbindung zwischen dem Auswerfmechanismus und dem Schalungsteil kann lösbar sein, beispielweise durch Einhaken des Auswerfmechanismus in dem Schalungsteil. Damit kann das Schalungsteil bzw. die Schalungsteile einfacher von dem Auswerfmechanismus entnommen werden, beispielsweise zur Reinigung oder für einen Formwechsel. Insbesondere kann der Auswerfmechanismus zum Zwecke der Entformung nur kurzzeitig mit dem wenigstens einen Schalungsteil verbunden bzw. darin eingehakt werden.

Das Fördermittel ist insbesondere ein umlaufendes Fördermittel, sodass bei einer Veränderung des Krümmungsradius des Fördermittels ein relatives Bewegen der Schalungsteile bewirkt wird. Eine Veränderung des Krümmungsradius des Fördermittels kann insbesondere durch eine Umlenkrolle oder ein gesondertes Ablenkelement bewirkt werden. Somit kann beispielsweise ein automatisches Auswerfen der Gussteile am Ende eines durch ein Förderband bereitgestellten Förderbereichs im Bereich der Umlenkrolle erfolgen. Als umlaufendes Fördermittel kann ein Förderband, ein Förderriemen, eine Förderkette oder Ähnliches zum Einsatz kommen.

Alternativ können die Fördermittel beispielsweise durch Förderschlitten gebildet werden, mit denen die Schalungsteile an jeweils unterschiedlichen Befestigungspunkten verbunden sind. Eine Relativbewegung der Förderschlitten kann dann ein relatives Bewegen der Schalungsteile bedingen.

Das Getriebe kann beispielsweise durch Roboterarme gebildet werden, mit dem oder denen die Schalungsteile an jeweils unterschiedlichen Befestigungspunkten verbunden sind. Eine Relativbewegung der Roboterarme kann dann ein relatives Bewegen der Schalungsteile bedingen.

Bevorzugt ist das Getriebe ein Gelenkgetriebe oder ein Schraubgetriebe. Das Getriebe kann einen Linearantrieb, beispielsweise in Form einer Kugelspindel, aufweisen, mit dem ein Schlitten linear vorschoben wird. Mit einem oder mehreren solchen Schlitten kann eine Entformungsbewegung wenigstens eines Schalungsteils direkt oder indirekt bewirkt werden.

Insbesondere kann das Gelenkgetriebe ein Kniehebelgetriebe umfassen. Dafür kann an dem Schlitten ein erster Schenkel verschwenkbar befestigt sein. Der erste Schenkel ist an seiner gegenüberliegendem Seite verschwenkbar an einem Schalungsteil befestigt, wobei die Befestigung in diesem Befestigungspunkt lösbar sein kann. Ein zweiter Schenkel ist schwenkbar in einem festen Lagerpunkt gelagert, und an seiner gegenüberliegenden Seite an dem ersten Schenkel gelagert, vorzugsweise in einem mittleren Bereich des ersten Schenkels. Weitere Schalungsteile können entsprechend gelagert sein. Die jeweiligen ersten Schenkel können sich insbesondere jeweils radial von dem zentralen Linearantrieb erstrecken. Der Linearantrieb verfährt den Schlitten vorteilhafterweise in vertikaler Richtung. Die ersten Schenkel des Getriebes können durch sich parallel dazu erstreckende dritte Schenkel ergänzt werden, die schwenkbar an dem Schlitten und dem Schalungsteil befestigt sind, wobei die letztere Befestigung insbesondere lösbar sein kann. Dadurch kann eine kinematisch bestimmte Bewegung des Schalungsteils erreicht werden. Wenn der erste und der dritte Schenkel in Form eines Parallelogramms angeordnet sind, so kann eine rein translatorische Bewegung des Schalungsteils erreicht werden. Durch entsprechend angepasste, unterschiedliche Längen des ersten und dritten Schenkels können aber auch gewünschte Kombinationen von Linear- und Rotationsbewegungen des Schalungsteils durch das Getriebe bewirkt werden.

Das Getriebe hat den Vorteil, dass je nach Position der Schalungsteile unterschiedliche Übersetzungen zwischen der Bewegung des Linearantriebs und der Bewegung der Schalungsteile vorgesehen werden können. So können die Schalungsteile beispielsweise zunächst schnell voneinander weg bewegt werden, dann aber während der weiteren Bewegung im bereits geöffneten Zustand eine steigende Öffnungskraft durch die Getriebeübersetzung ermöglicht werden, die der steigenden elastischen Kraft der Trennschicht entgegenwirkt.

Vorteilhafterweise weist die elastische Trennschicht wenigstens einen Trennschichtbefestigungsbereich auf, wobei der wenigstens eine Trennschichtbefestigungsbereich formschlüssig in wenigstens einem der Schalungsteile befestigt ist. Insbesondere ist der Trennschichtbefestigungsbereich über einen Hinterschnitt in wenigstens einem der Schalungsteile befestigt. So kann dieser Hinterschnitt beispielsweise bereits beim Gießen der elastischen Trennschicht in der Schalung hergestellt werden, indem das flüssige Material der elastischen Trennschicht in einen Hinterschnitt der Schalung läuft. Der formschlüssige Bereich kann auch zwischen den Schalungsteilen vorgesehen sein, oder zwischen den Schalungsteilen und einem Deckel der Gussform, sodass der Formschluss nur bei geschlossener Gussform bereitgestellt wird.

Alternativ oder zusätzlich kann die elastische Trennschicht in wenigstens einem Trennschichtbefestigungsbereich kraftschlüssig in wenigstens einem der Schalungsteile befestigt sein. Insbesondere kann der Trennschichtbefestigungsbereich in einem oder zwischen zwei Schalungsteilen bzw. einem Schalungsteil und dem Deckel der Gussform eingeklemmt werden.

Die elastische Trennschicht kann in wenigstens einem Trennschichtbefestigungsbereich stoffschlüssig mit einem der Schalungsteile befestigt sein, beispielsweise durch Kleben.

Alternativ kann der Formschluss auch durch zusätzliche Befestigungselemente im Schalungsteil erreicht werden, die den Trennschichtbefestigungsbereich der elastischen Trennschicht durchdringen oder darin angeordnet sind, wie beispielsweise Schrauben oder Widerhaken.

Insbesondere kann die elastische Trennschicht nur für die Entformung kurzzeitig an den Schalungsteilen befestigt bzw. geklemmt werden.

Insbesondere weist die elastische Trennschicht mindestens zwei Trennschichtbefestigungsbereiche auf, und ist mittels dieser mit mindestens zwei der Schalungsteile befestigt. Vorteilhafterweise weist die elastische Trennschicht jeweils mindestens einen Trennschichtbefestigungsbereich pro Schalungsteil auf, und ist somit an allen Schalungsteilen befestigt.

In einer Ausführungsform weist die elastische Trennschicht einen umlaufenden Trennschichtbefestigungsbereich auf. Vorteilhafterweise kann dieser umlaufende Trennschichtbefestigungsbereich an allen Schalungsteilen befestigt sein. Der umlaufende Trennschichtbefestigungsbereich ermöglicht eine äußerst gleichmäßige Einleitung von Zugkraft in die Trennschicht, sodass diese für das Entformen des Gussteils einfach aufgeweitet werden kann, ohne dass Spannungsspitzen entstehen. In anderen Ausführungsformen kann es aber auch vorteilhaft sein, wenn nur bereichsweise oder lokale Trennschichtbefestigungsbereiche vorgesehen sind, insbesondere in Abhängigkeit der Geometrie der Trennschicht.

Die Gussform umfasst vorteilhafterweise einen Deckel, der auf der Schalung anordenbar ist, um die Gussform zu schließen. Insbesondere kann die Trennschicht nicht am Deckel, sondern lediglich an den Schalungsteilen befestigt sein. Der Deckel kann mit einem Einfüllstutzen für den Gusswerkstoff sowie einer Entlüftungsöffnung versehen sein.

Wenn die Befestigung der elastischen Trennschicht durch den Deckel zumindest mitbewirkt wird, so kann ein mehrteiliger Deckel vorgesehen sein, um eine Bewegung wenigstens eines Deckelteils zusammen mit wenigstens einem der Schalungsteile zu ermöglichen, damit der Trennschichtbefestigungsbereich im Befestigungsbereich zwischen Deckel und Schalung gehalten werden kann. Alternativ kann der Trennschichtbefestigungsbereich sich beim Entformen relativ gegenüber dem Deckel bewegen.

Die Erfindung stellt weiterhin ein Verfahren zum Herstellen einer Gussform bereit, das das Anordnen eines physischen Urmodells in der Schalung, das Auffüllen des Hohlraums zwischen der Schalung und dem physischen Urmodell mit einem elastischen Material in flüssiger Form, sowie das Aushärten des elastischen Materials zu einer elastischen Trennschicht umfasst, wobei die elastische Trennschicht und die Schalung miteinander verbunden werden. Das Verbinden der Schalung und der elastischen Trennschicht kann insbesondere beim Aushärten des elastischen Materials stattfinden, alternativ aber auch danach durch Einbringen eines separaten Befestigungselements, oder durch Klemmen zwischen verschiedenen Bauteilen, insbesondere Schalungsteilen und/oder einem Deckel der Gussform.

Das Herstellen der Schalung kann in Abhängigkeit von der Geometrie eines Urmodells des Gussteils erfolgen. Diese Abhängigkeit kann physisch, also durch Verwendung eines geometrisch abgewandelten physischen Urmodells, oder rechnerisch, also durch mathematische Operationen ausgehend von einem digitalen Urmodell, sein.

Insbesondere kann die Schalung und/oder das physische Urmodell durch ein generatives Fertigungsverfahren hergestellt werden, also beispielsweise durch 3D-Druck. Alternativ kann die Schalung und/oder das physische Urmodell subtraktiv hergestellt werden, also beispielsweise durch Fräsen, oder manuelles spanendes Ausformen. Schließlich ist es auch möglich, dass die Schalung und/oder das physische Urmodell durch Umformen hergestellt wird, beispielsweise durch Pressen oder manuelles Formen von aushärtbarer Masse.

Insbesondere kann ein digitales Schalungsmodell in Abhängigkeit von den Geometriedaten des Urmodells berechnet werden, und die Schalung durch ein generatives Fertigungsverfahren hergestellt werden.

In einer Ausführungsform werden Geometriedaten für die Herstellung der Schalung durch Aufbringen eines Abstandes in Normalrichtung der Oberfläche der Geometriedaten des Urmodells bestimmt. Vorteilhafterweise liegt der Abstand in Normalrichtung bei weniger als 20 mm, weniger als 10 mm, oder weniger als 5 mm und/oder mehr als 2 mm. Die aufgedickten Geometriedaten des Urmodells können von Geometriedaten einer Schalung subtrahiert oder darauf aufgetragen werden.

Die Geometriedaten des Urmodells sind vorteilhafterweise Daten, die dessen Oberflächengeometrie definieren. Wird nun jeweils in Richtung der Normalvektoren der Oberfläche ein vorbestimmter Abstand aufgebracht, so kann durch dieses Aufdicken ein recht konstanter Abstand zwischen der hergestellten Schalung und dem physischen Urmodell erreicht werden, und eine elastische Trennschicht mit relativ konstanter Dicke erzeugt werden. Es ist aber auch möglich, die Dicke der elastischen Trennschicht bereichsweise gezielt zu variieren, um eine bessere Haltbarkeit hinsichtlich lokaler Spannungsspitzen zu erreichen. In anderen Ausführungsformen ist es auch möglich, dass die Geometriedaten für die Herstellung der Schalung durch Skalierung der Geometriedaten des Urmodells in einer oder mehreren Raumrichtungen bestimmt werden. Schließlich ist es auch möglich, dass die Geometriedaten für die Herstellung der Schalung durch einfachen Versatz der Oberflächen des Urmodells in einer oder mehreren Richtungen bestimmt werden.

Die Schalung kann mehrteilig hergestellt werden oder nach Herstellung in mehrere Schalungsteile zerteilt werden. Die mehrteilige Gestaltung der Schalung ermöglicht ein Aufweiten der elastischen Trennschicht beim Auswerfen des Gussteils durch relative Bewegung der Schalungsteile.

In einer Ausführungsform des Verfahrens fließt das elastische Material beim Auffüllen des Hohlraums in Befestigungsbereiche der Schalung, die insbesondere als Hinterschnitt ausgeformt sind. Dadurch wird beim Aushärten des elastischen Materials eine Verbindung zwischen der Trennschicht und Schalung automatisch erzeugt.

Das erfindungsgemäße Verfahren umfasst insbesondere, dass aus einem physischen Urmodell, beispielsweise einer Prototypenform für einen Klettergriff aus Hartschaum, mittels eines 3D-Scans ein digitales Urmodell erzeugt wird, insbesondere ein digitales Flächenmodell. Alternativ kann auch direkt ein digitales Urmodell, beispielsweise ein CAD-3D-Modell, modelliert werden. Insbesondere wird ausgehend von dem digitalen Urmodell wenigstens ein Flächenbereich mit einem Offset versehen, also in Richtung der Flächennormalen um einen gewünschten Abstand verschoben. Alternativ kann wenigstens ein Flächenbereich in alle Raumrichtungen gleichmäßig hochskaliert werden. Die berechnete Oberfläche ist somit in einem Abstand zur Oberfläche des digitalen Urmodells, und kann zur Herstellung einer an das digitale Urmodell angepassten Schalung verwendet werden, die insbesondere mit einem generativen Fertigungsverfahren hergestellt werden kann.

Soweit nur ein digitales Urmodell besteht, kann ein physisches Urmodell gefertigt werden. Das ausgehend bestehende oder extra gefertigte physische Urmodell wird in der Schalung angeordnet, wobei nun ein Hohlraum zwischen dem Urmodell und der Schalung vorliegt, der mit einer flüssigen elastischen Masse aufgefüllt werden kann. Dadurch wird die Oberfläche des Urmodells abgeformt und es entsteht eine Negativform des Urmodells.

Bei dem elastischen Material handelt es sich insbesondere um Silikon mit einer Shore-A-Härte von ca. 10 bis 80.

Die Schalung ist oder wird insbesondere in wenigstens zwei Schalungsteile geteilt. In den Schalungsteilen können Vertiefungen mit Hinterschneidungen eingearbeitet sein oder werden. Das eingegossene elastische Material in flüssiger Form fließt in diese Vertiefungen ein, und härtet dort aus.

Somit wird das elastische Material insbesondere formschlüssig mit der Schalung verbunden. Alternativ oder zusätzlich können Verbindungselemente für formschlüssige, kraftschlüssige oder stoffschlüssige Verbindungen vorgesehen werden, wie beispielsweise Schrauben, Druckkraft oder Kleber.

Nachdem die Schalung vorteilhafterweise in mehreren Teilen vorliegt, können diese nach einem Gießvorgang so voneinander wegbewegt werden, dass sich die elastische Trennschicht dehnt und das Gussteil sich somit von der elastischen Trennschicht löst. Dadurch wird der Formschluss und/oder Reibschluss zwischen Gussteil und Gusswerkzeug auf ein Minimum reduziert. Dies ermöglicht ein automatisches Entformen, insbesondere mittels Schwerkraft, Abstreifen oder Manipulatoreinsatz. Aufgrund der Reproduzierbarkeit der Entformungsbewegung durch Vorgabe der Bewegung der Schalungsteile und der definierten Verbindung zwischen der Trennschicht und Schalung ist eine einfache Automatisierbarkeit des Entformungsprozesses möglich. Dadurch kann das Verfahren sehr kostengünstig betrieben werden. Zudem ermöglicht der Einsatz additiver Fertigungsverfahren zur Herstellung der Schalung, dass darin vorgesehene Hinterschneidungen einfach gefertigt werden können, wodurch eine kostengünstige formschlüssige Verbindung zwischen Schalung und Trennschicht realisierbar ist.

In anderen Ausführungsformen kann die Schalung aber auch subtraktiv oder als Gussteil, insbesondere mit eingelassenen Hinterschnitten, gefertigt werden. Alternativ oder zusätzlich können Hinterschnitte zur Befestigung der elastischen Trennschicht durch Zusammensetzen von mehreren Schalungsteilen und/oder einem Schalungsdeckel erzeugt werden.

Die Erfindung betrifft weiterhin ein Verfahren zum Herstellen eines Gussteils, bei dem eine wenigstens bereichsweise durch eine elastische Trennschicht gebildete Gussform mit einem Gusswerkstoff befüllt wird, wobei die Trennschicht zumindest bereichsweise durch mehrere Schalungsteile einer Schalung gestützt wird. Dann härtet der Gusswerkstoff aus. Aushärten des Gusswerkstoffs umfasst sämtliche Zustandsänderungen des Gusswerkstoffes, in denen dieser seine Viskosität oder Härte ausgehend von einem flüssigen Zustand erhöht. Dann erfolgt ein relatives Bewegen der Schalungsteile zueinander zur elastischen Verformung der Trennschicht, was die Entnahme des aus dem ausgehärteten Gusswerkstoff geformten Gussteils ermöglicht.

Bei dem Gusswerkstoff handelt es sich insbesondere um einen Kunststoff, beispielsweise Kautschuk, insbesondere Naturkautschuk, Ethylen-Propylen-Dien-Kautschuk, Chloropren-Kautschuk, Silikonkautschuk, oder um ein Harz, insbesondere Polyesterharz, Epoxidharz, Vinylesterharz, Polyurethan bzw. Polyurethanschaum.

Es ist möglich, dass Einlagen, beispielsweise Faserverstärkung und/oder Treibmittel, insbesondere zur Schaumerzeugung, im Gusswerkstoff vorgesehen sind.

Bei dem Gusswerkstoff kann es sich aber auch um Lebensmittel handeln, beispielsweise Teig, Eis, Schokolade, Fett oder Ei, sowie um Wachse.

Vorteilhafterweise hat der Gusswerkstoff eine Aggregatszustandsänderung von fest bzw. zähelastisch zu flüssig, zwischen - 40 °C und 250 °C. Allerdings können auch andere Stoffe, die an der Luft oder unter einer bestimmten Atmosphäre aushärten als Gusswerkstoff eingesetzt werden, beispielsweise Klebstoffe, Zement oder Stahlbeton.

Weiterhin ist es auch möglich, Sinterwerkstoffe als Gusswerkstoffe zu verwenden, die unter Druckeinfluss zu Formteilen bzw. Grünlingen geformt bzw. verbunden werden.

Insbesondere werden die Schalungsteile relativ zueinander translatorisch bewegt, um die Trennschicht elastisch zu verformen.

Alternativ oder zusätzlich können die Schalungsteile relativ zueinander verdreht werden, um die Trennschicht elastisch zu verformen.

Die erfindungsgemäße Gussform und die erfindungsgemäßen Verfahren ermöglichen insbesondere eine kostengünstige Herstellung von Kleinserien von Gussteilen, die Hinterschnitte aufweisen. Weiterhin ist eine automatische Herstellung von tragenden Gussteilen in Leichtbauweise möglich. Zudem eignet sich die Anwendung der Erfindung zum Herstellen von Urmodellen bzw. verlorenen Formen für Vollformguss. Insbesondere können Urmodelle bzw. verlorene Formen in der erfindungsgemäßen Gussform und/oder mit dem erfindungsgemäßen Verfahren aus Hartschaum hergestellt werden.

Insbesondere kann die Erfindung bei der Herstellung von Klettergriffen angewandt werden, da diese oft komplexe Geometrien mit vielen Hinterschnitten aufweisen. Zudem ist es möglich die raue Oberfläche von Klettergriffen durch die Gussform vorzugeben, und dennoch eine einfache Entformung zu gewährleisten. Im Stand der Technik wird die Entformung durch die Rauigkeit erschwert.

Die erfindungsgemäße Gussform ermöglicht, dass die Schalung optimal an die Form des Gussteils angepasst ist, wodurch der Verbrauch von dem oft teuren Material für die elastische Trennschicht reduziert werden kann. Zudem können ungleichmäßig große Wandstärken der elastischen Trennschicht, die schwierig zu entformende Bereiche darstellen können, vermieden werden. Spannungs- bzw. Belastungsspitzen in der elastischen Trennschicht bei der Entformung können durch eine geeignete Auslegung der Dicke der elastischen Trennschicht, sowie durch eine geeignete Verteilung der Befestigungsbereiche vermieden werden. Dafür kann eine Belastungsberechnung zum Einsatz kommen, beispielweise über eine FE-Modellierung, und insbesondere eine darauf basierende Optimierung der Wandstärken und/oder Anordnung der Trennschichtbefestigungsbereiche.

Die Entformung der Gussteile kann somit zeitoptimiert werden und ist zudem automatisierbar. Zudem wird eine Verlängerung der Betriebsdauer der Gussform und insbesondere von deren elastischer Trennschicht ermöglicht. Die Schalungsteile können nach Entfernen einer verschlissenen Trennschicht wiederverwendet werden, indem eine neue elastische Trennschicht zwischen die Schalungsteile und das physische Urmodell eingegossen wird.

Als Gussverfahren eignet sich für die erfindungsgemäße Gussform und das Verfahren zum Herstellen eines Gussteils insbesondere Schwerkraftgießen, Vakuumgießen, Niederdruckgießen oder Schäumen.

Insbesondere können Gussteile aus duroplastischen Kunststoffen hergestellt werden. Das Urmodell des Gussteils und/oder die Schalung können insbesondere durch 3D-Druck oder Stereolithografie hergestellt werden. Niederdruckspritzgussverfahren, insbesondere mit Zwei-Komponentengusswerkstoffen, beispielsweise Polyurethan, bieten besondere Vorteile in Kombination mit der erfindungsgemäßen Gussform und dem erfindungsgemäßen Verfahren, da die Investitionskosten erheblich geringer sind als bei herkömmlichen Spritzgussverfahren.

Insbesondere können mit der erfindungsgemäßen Gussform und dem Verfahren Gießteile mit Bauteilgrößen zwischen 20 mm und 2.500 mm, vorteilhafterweise zwischen 50 mm und 500 mm, hergestellt werden.

Die Erfindung wird im Folgenden weitergehend anhand von beispielhaften Ausführungsformen erläutert, die in den folgenden Figuren dargestellt sind.
- Figur 1: zeigt eine perspektivische Ansicht einer Schalung für eine Ausführungsform einer erfindungsgemäßen Gussform.
- Figur 2: zeigt eine Schnittansicht durch eine Ausführungsform der erfindungsgemäßen Gussform mit der Schalung gemäß Figur 1.
- Figuren 3A bis 3I: zeigen Schnittansichten von Schalungsteilen und elastischen Trennschichten mit deren Befestigungsbereichen.
- Figuren 4A und 4B: zeigen eine seitliche und obere Schnittansicht eines Schalungsteils und einer Trennschicht, mit deren Befestigungsbereichen.
- Figuren 5A und 5B: zeigen eine seitliche und obere Schnittansicht eines Schalungsteils und einer Trennschicht, mit deren Befestigungsbereichen.
- Figuren 6A und 6B: zeigen eine seitliche und obere Schnittansicht eines Schalungsteils und einer Trennschicht, mit deren Befestigungsbereichen.
- Figuren 7A bis 7D: zeigen eine Ausführungsform eines erfindungsgemäßen Verfahrens zum Herstellen eines Gussteils.
- Figur 8: zeigt eine Vorrichtung zur Durchführung einer Ausführungsform eines erfindungsgemäßen Verfahrens zum Herstellen eines Gussteils.
- Figur 9: zeigt eine schematische Darstellung einer erfindungsgemäßen Ausführungsform eines Verfahrens zum Herstellen einer Gussform.
- Figur 10: zeigt eine seitliche Schnittansicht einer weiteren Ausführungsform der erfindungsgemäßen Gussform.

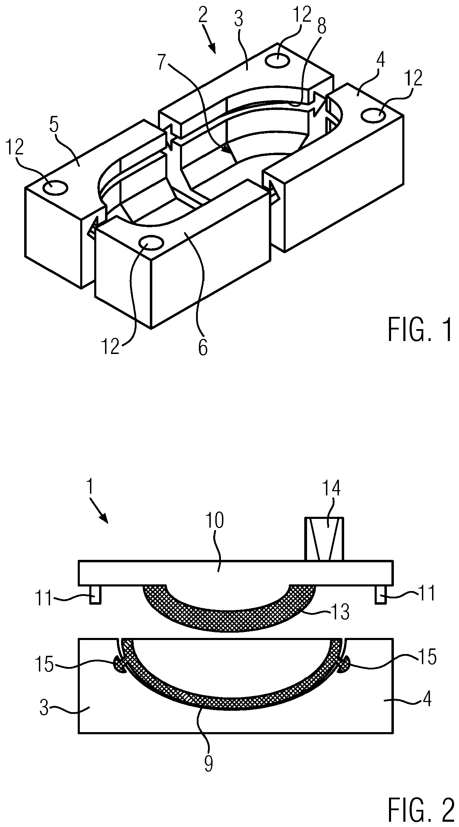

In Figur 1 ist eine Schalung 2 einer erfindungsgemäßen Gussform dargestellt, wobei die Schalung 2 vier Schalungsteile 3, 4, 5, 6 umfasst, die relativ zueinander beweglich sind. Die Schalungsteile 3, 4, 5, 6 bilden gemeinsam eine Vertiefung 7 aus, in deren Wand ein als Hinterschnitt ausgeformter Schalungsbefestigungsbereich 8 vorgesehen ist. Der Schalungsbefestigungsbereich 8 erstreckt sich umlaufend durch alle Schalungsteile 3, 4, 5, 6.

Wie in der Schnittansicht gemäß Figur 2 gesehen werden kann, ist in der Ausführungsform der erfindungsgemäßen Gussform 1 eine elastische Trennschicht 9 innerhalb der Vertiefung angeordnet. Insbesondere kleidet die elastische Trennschicht 9 die Vertiefung 7 in der Schalung 2 vollständig aus.

Die elastische Trennschicht 9 bildet ein Negativ wenigstens eines Bereichs einer äußeren Form eines Gussteils. Um die äußere Form des Gussteils vollständig zu definieren, weist die Gussform 1 einen Deckel 10 auf, der mit Zentrierstiften 11 in Zentrieröffnungen 12 der Schalung 2 angeordnet werden kann. Insbesondere kann pro Schalungsteil 3, 4, 5, 6 eine Zentrieröffnung 12, und ein entsprechender Zentrierstift 11 des Deckels 10 vorgesehen sein. Der Deckel 10 weist weiterhin eine Trennschicht 13 auf, die zusammen mit der elastischen Trennschicht 9 die negative Form vollständig begrenzen kann. Weiterhin weist der Deckel 10 einen Einfüllstutzen 14 auf, mit dem flüssiger Gusswerkstoff in die Gussform 1 eingefüllt werden kann. Somit eignet sich die Gussform 1 insbesondere zum Schwerkraftgießen. Alternativ kann diese Gussform oder andere erfindungsgemäße Gussformen aber auch beim Vakuumgießen, Niederdruck-Spritzgießen, insbesondere Reaction Injection Moulding, oder Schäumen, eingesetzt werden.

Wie in Figur 2 dargestellt, umfasst die elastische Trennschicht 9 Trennschichtbefestigungsbereiche 15, die in den als Hinterschnitt ausgeformten Schalungsbefestigungsbereichen 8 mit entsprechender Geometrie der Schalung 2 angeordnet sind. Somit ist die elastische Schicht 9 an den Schalungsteilen 3, 4, 5, 6 befestigt, sodass ein relatives Bewegen der Schalungsteile 3, 4, 5, 6 voneinander weg ein Aufweiten der elastischen Trennschicht 9 bewirkt. Wenn nun ein fertig geformtes Gussteil in der durch die elastische Trennschicht 9 definierten Negativform enthalten ist, so kann dieses durch Aufweiten der elastischen Trennschicht 9 einfach entnommen bzw. ausgeworfen werden. Dabei ermöglicht eine geeignete Gestaltung der Befestigungsbereiche 8, 15, so dass die Kräfte für das Aufweiten der elastischen Trennschicht 9 gleichmäßig bzw. in gewünschten Bereichen der elastischen Trennschicht 9 eingeleitet werden können. Damit kann eine gezielte, Aufweitung der elastischen Trennschicht 9 für das Auswerfen eines Gussteils in Einklang mit deren Gestaltung erfolgen. Ein Auswerfen des Gussteils unter minimierten Belastungen ist somit möglich, selbst wenn dieses mit Hinterschnitten bezüglich der elastischen Trennschicht 9 ausgestaltet ist, die in Figur 2 nicht dargestellt sind.

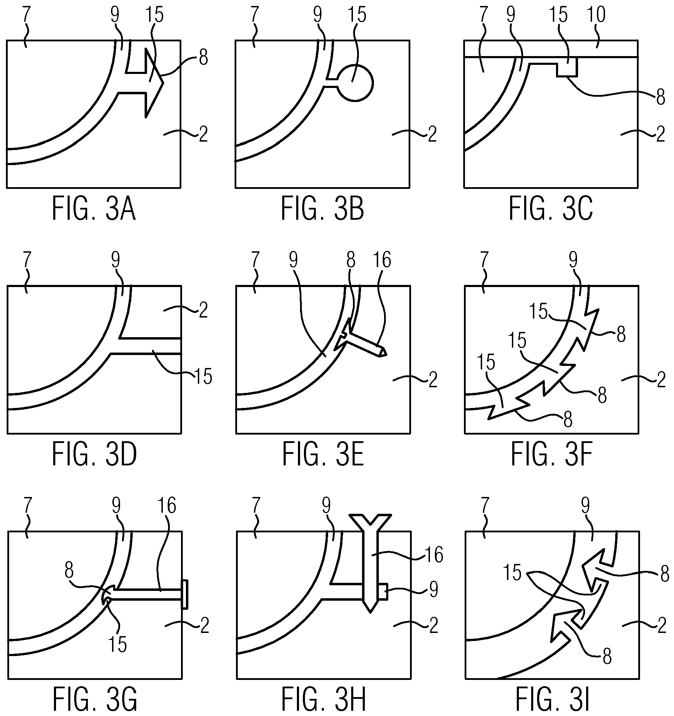

Bezüglich der Befestigung der elastischen Trennschicht 9 in der Schalung 2 sind erfindungsgemäß eine Vielzahl von Gestaltungen möglich, von denen einige schematisch in Figuren 3A bis 3I dargestellt sind.

So wird in Figur 3A ein tannenbaumförmiger Trennschichtbefestigungsbereich 15 gezeigt, der von einem entsprechend geformten Befestigungsbereich 8 in der Schalung 2 aufgenommen ist.

In Figur 3B ist ein im Wesentlichen mit einer runden Verdickung ausgestalteter Trennschichtbefestigungsbereich 15 dargestellt.

In Figur 3C ist der Trennschichtbefestigungsbereich 15 im Anlagebereich zwischen Schalung 2 und Deckel 10 angeordnet, sodass ein Einlegen der vorgeformten elastischen Trennschicht 9 in die Schalung 2 möglich ist, und der Trennschichtbefestigungsbereich 15 zwischen Deckel 10 und Schalung 2 gehalten wird. Der Befestigungsbereich 8 der Schalung weist vorteilhafterweise eine Stufe auf, um einen Formschluss mit dem Trennschichtbefestigungsbereich 15 herzustellen. Es ist aber auch möglich, dass der Trennschichtbefestigungsbereich 15 nur über Reibschluss zwischen Deckel 10 und Schalung 2 gehalten wird.

In Figur 3D ist eine mögliche Ausführungsform dargestellt, in der der Trennschichtbefestigungsbereich 15 über Kraftschluss in der Schalung 2 befestigt ist. Insbesondere kann eine Befestigung über Reibkräfte durch Klemmen des Trennschichtbefestigungsbereichs 15 in der Schalung 2 erfolgen. Es ist aber auch möglich, dass der Trennschichtbefestigungsbereich 15 mittels Unterdruck angesaugt wird, um den Kraftschluss herzustellen. In weiteren Ausführungsformen ist es auch möglich, dass unterstützend oder alternativ Klebstoff im Bereich des Trennschichtbefestigungsbereichs 15 vorgesehen wird, um eine stoffschlüssige Verbindung zur Schalung 2 herzustellen. Der Trennschichtbefestigungsbereich 15 in Figur 3D kann als stiftförmiges oder plattenförmiger Bereich der elastischen Trennschicht 9 ausgestaltet sein.

In Figur 3E ist ein zusätzliches Befestigungselement 16 gezeigt, das mit der Schalung 2 verbunden ist, und somit den Befestigungsbereich 8 der Schalung 2 bereitstellt. Insbesondere handelt es sich bei diesem Befestigungselement 16 um eine Schraube, die in die Schalung 2 eingedreht ist, und in der elastischen Trennschicht 9 aufgenommen ist, so dass diese durch einen Hinterschnitt am Befestigungselement 16 befestigt wird. Es können aber auch andere Befestigungselemente 16 zum Einsatz kommen, wie z.B. Bügel, Klammern, Platten und Ähnliches. Vorteilhafterweise wird das Befestigungselement 16 in die elastische Trennschicht 9 eingegossen, indem das Befestigungselement 16 zunächst in der Schalung 2 angeordnet wird, und dann die Trennschicht 9 in die Vertiefung 7 der Schalung 2 gegossen wird. Alternativ kann das Befestigungselement nach dem Herstellen der elastischen Trennschicht 9 eingebracht werden, und die elastische Trennschicht 9 erst dann mit der Schalung 2 verbinden.

In Figur 3F sind mehrere Befestigungsbereiche 8 parallel in der Schalung 2 vorgesehen, in die mehrere Trennschichtbefestigungsbereiche 15 der elastischen Trennschicht 9 eingreifen. Insbesondere sind die Befestigungsbereiche 8 auf verschiedenen Ebenen der Schalung, also insbesondere auf verschiedenen Höhen vorgesehen, und können somit einen sicheren Halt der elastischen Trennschicht in allen Richtungen der Oberfläche der Vertiefung 7 bereitstellen.

In Figur 3G ist ein weiteres Befestigungselement 16 dargestellt, hier in Form eines Widerhakens. Das Befestigungselement 16 kann nach dem Anordnen der elastischen Trennschicht 9 in der Schalung 2 eingebracht werden, und stellt einen Formschluss mit der elastischen Trennschicht 9 her.

In Figur 3H wird ein Befestigungselement 16 in Form einer Schraube gezeigt, das in einen sich in die Schalung 2 erstreckenden Trennschichtbefestigungsbereich 15 eingedreht wird. Dies ermöglicht eine nachträgliche Fixierung der elastischen Trennschicht 9 in der Schalung 2.

In Fig. 3A-D, 3F, 3H sind hervorstehenden Trennschichtbefestigungsbereiche 15 und zurückgesetzte Befestigungsbereiche 8 in der Schalung 2 vorgesehen.

Alternativ kann gemäß Figur 3I ein hervorstehender Befestigungsbereich 8 der Schalung 2 und ein zurückgesetzter Trennschichtbefestigungsbereich 15 vorgesehen sein. Der hervorstehende Befestigungsbereich 8 kann einen Hinterschnitt aufweisen, beispielsweise durch die dargestellte tannenbaumartige Form. Es ist möglich, mehrere dieser Befestigungsbereiche 8 vorzusehen.

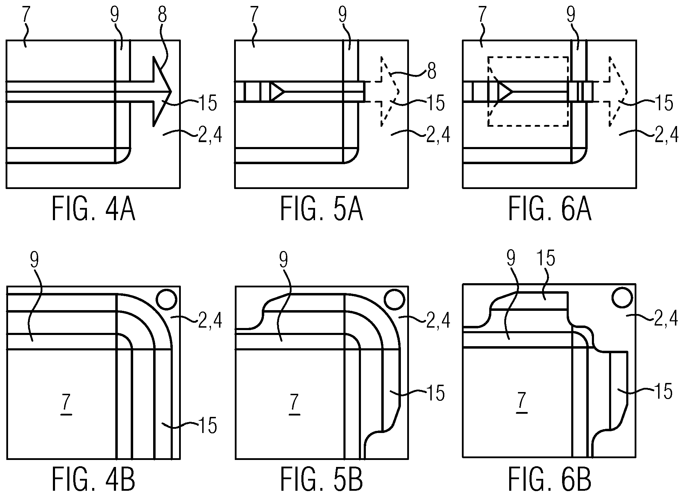

Die vorangehend dargestellten Befestigungsbereiche 8,15 können jeweils umlaufend, bereichsweise oder nur lokal vorgesehen sein. In den Figuren 4 bis 6 werden entsprechende Anordnungen beispielshaft für einen Befestigungsbereich ähnlich zu Figur 3A dargestellt. Entsprechende Anordnungen können aber auch für die anderen Befestigungsbereiche vorgesehen werden.

Figur 4A zeigt eine seitliche Schnittansicht eines Schalungsteils 4 und Figur 4B die zugehörige Draufsicht. Der Trennschichtbefestigungsbereich 15 läuft dabei zumindest durch das Schalungsteil 4 durchgehend von einer zur anderen Seitenfläche.

In der Ausführungsform gemäß Figuren 5A und 5B ist der Trennschichtbefestigungsbereich 15 des elastischen Schalungsteils lediglich im Bereich einer Ecke eines Schalungsteils 4 vorgesehen. Dies ermöglicht, dass Kräfte in wenigstens zwei Richtungen auf die elastische Trennschicht 9 in diesem Eckbereich aufgebracht werden können, um die elastische Trennschicht 9 zur Entnahme des Gussteils aufzuweiten. Zudem wird der Trennschichtbefestigungsbereich 15 in Position gehalten und lediglich die Trennschicht 9 in Entformungsrichtung aufgedehnt, was eine Rückführung in die erste Anordnung nach dem Entformvorgang vereinfacht.

In der Ausführungsform gemäß Figuren 6A und 6B sind nur partiell Trennschichtbefestigungsbereiche 15 der elastischen Trennschicht 9 vorgesehen, die in Trennschichtbefestigungsbereichen 8 mit der Schalung 2 bzw. dem Schalungsteil 4 verbunden sind. Vorteilhafterweise sind die Trennschichtbefestigungsbereiche 15 an verschiedenen Seiten des Schalungsteils 4 bzw. der Schalung 2 vorgesehen. Damit kann ein Aufweiten der elastischen Trennschicht in mehrere Richtungen möglich sein.

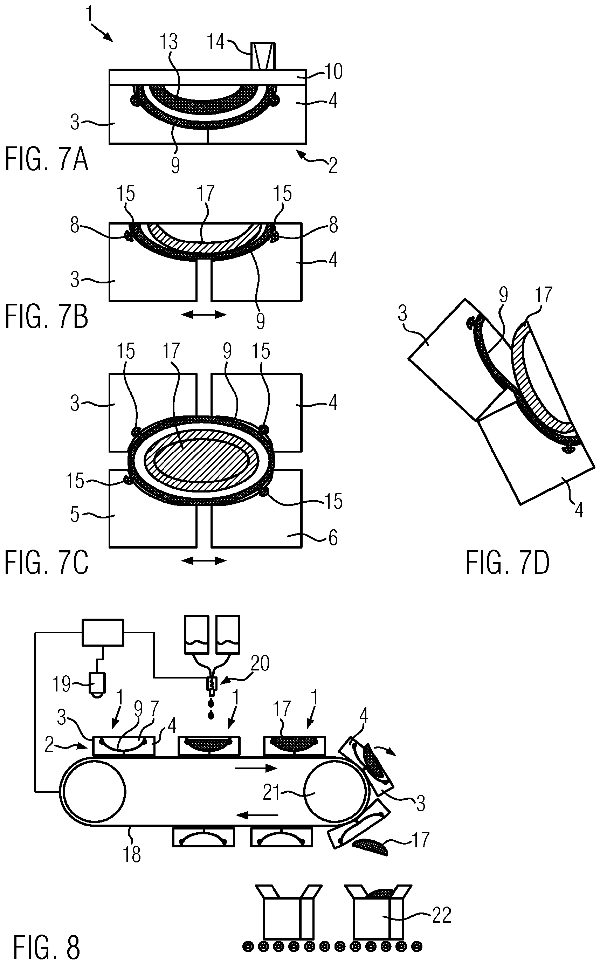

Eine Ausführungsform eines erfindungsgemäßen Verfahrens zum Herstellen eines Gussteils wird in Figuren 7A bis 7D gezeigt. Die erfindungsgemäße Gussform wird zunächst in einen Ausgangszustand gebracht, nämlich indem die Schalungsteile 3, 4 in einer ersten Anordnung angeordnet werden, in der sie aneinander angrenzen und somit eine geschlossene Schalung 2 bilden. Die Gussform 1 wird durch den Deckel 10 geschlossen. Dann wird flüssiger Gusswerkstoff durch den Einfüllstutzen 14 in den Formhohlraum zwischen der elastischen Trennschicht 9 und der Trennschicht 13 des Deckels 10 eingefüllt. Nach dem Aushärten des Gusswerkstoffs zu einem Gussteil 17 wird der Deckel 10 entfernt, und die Schalungsteile 3, 4 werden translatorisch relativ zueinander bewegt, nämlich voneinander entfernt, wie in Figuren 7B und 7C in Seiten- und Draufsicht dargestellt ist.

Nachdem die elastische Trennschicht 9 über die Trennschichtbefestigungsbereiche 15 mit den Schalungsteilen 3, 4 in deren Befestigungsbereichen 8 befestigt ist, wird die elastische Trennschicht aufgeweitet, sodass die elastische Trennschicht 9 von den Außenseiten des Gussteils 17 abgelöst wird. Dies ermöglicht bereits das Gussteil 17 zu entnehmen. Die Entnahme des Gussteils 17 kann alternativ oder ergänzend auch dadurch ermöglicht bzw. erleichtert werden, dass die Schalungsteile 3, 4 relativ zueinander verdreht werden, wie in Figur 7D gezeigt. Nach der Entnahme des Gussteils 17 kann die Gussform 1 schnell wieder in den Zustand wie in Figur 7A gebracht werden, nämlich durch Zusammenschieben der Schalungsteile 3, 4, 5, 6, sodass sofort ein weiteres Gussteil hergestellt werden kann. Dies ermöglicht insbesondere eine Automatisierung des Verfahrens.

In der Ausführungsform gemäß Figuren 7A-D ist das Gussteil 17 mit einer relativ einfachen Geometrie dargestellt. Die Vorteile des erfindungsgemäßen Verfahrens bzw. der erfindungsgemäßen Form kommen aber insbesondere zum Tragen, wenn das Gussteil 17 komplexe und hinterschneidende Bereiche aufweist, die ansonsten nur schwer aus elastischen Trennschicht 9 auszulösen wären.

In Figur 8 ist eine Möglichkeit für eine entsprechende Automatisierung des Verfahrens dargestellt. Dabei sind die Schalungsteile 3, 4 einer Schalung 2 auf einem Fördermittel 18 in Form eines Förderbandes angeordnet. Bei ebener Erstreckung des Fördermittels 18 sind die Schalungsteile 3, 4 in einer ersten Anordnung aneinander gefahren.

Mit einem Sensor 19 kann überprüft werden, ob die Gussform 1 zur Aufnahme von Gusswerkstoff bereit ist. Insbesondere kann überprüft werden, ob die Vertiefung 7 der Gussform 1 frei von Gusswerkstoff oder Verunreinigungen ist und/oder ob die elastische Trennschicht 9 intakt ist.

Die Gussform 1 wird mittels des Fördermittels 18 stromabwärts bewegt, und zwar zu einer Bereitstellungsvorrichtung 20 für den Gusswerkstoff. Dabei handelt es sich hier insbesondere um eine Zwei-Komponenten-Dosieranlage, insbesondere eine Polyurethan-Anlage, die Polyol und Isocyanat aus gesonderten Tanks bereitstellt, die in der Bereitstellungsvorrichtung 20 bzw. in der Vertiefung 7 vermischt werden. Dadurch kommt es zu einer chemischen Reaktion und zu einem Aufschäumen und/oder Aushärten des Gusswerkstoffs in der Vertiefung 7 der Gussform 1.

Während des Aushärteprozesses wird die Gussform 1 durch das Fördermittel 18 gefördert.

Wenn die Gussform 1 zusammen mit dem Fördermittel 18 um eine Umlenkrolle 21 des Fördermittels 4 umläuft, so werden die Schalungsteile 3, 4 relativ zueinander bewegt bzw. verdreht. Dies wird insbesondere dadurch erreicht, dass die Schalungsteile 3, 4 gesondert voneinander an jeweils eigenen Befestigungspunkten auf dem Fördermittel 18 befestigt sind. Die Krümmung des Fördermittels 18 im Bereich der Umlenkrolle führt zu einer Veränderung der relativen Anordnung der Schalungsteile 3, 4. An Stelle von einer Umlenkrolle 21 kann auch ein anderes gesondert vorgesehenes Entschalelement vorgesehen sein, dass das Fördermittel lokal umlenkt, um eine Entformung zu ermöglichen.

Nachdem die Schalungsteile 3, 4 voneinander wegbewegt werden, wird die elastische Trennschicht 9, die mit den Schalungsteilen 3, 4 verbunden ist, von dem Gussteil 17 wegbewegt, sodass sie sich von dessen Oberfläche zumindest bereichsweise ablöst. Zudem können hinterschneidende Eingriffe des Gussteils 17 in der Trennschicht 9 freigegeben werden.

Die Gussform 1 wird an der Umlenkrolle 21 insbesondere auf eine untere Seite bzw. Rücklaufseite des Fördermittels 18 gefördert, sodass die Öffnung der Gussform 1 nach unten weist, und das Gussteil automatisch aufgrund von Schwerkraft ausgeworfen wird. Vorteilhafterweise kann unter dem Fördermittel 18 eine Verpackung 22 oder ein weiteres Fördermittel angeordnet werden, in die oder auf das das Gussteil 17 fällt oder hineingelegt wird. Die Verpackung 22 wird dann abtransportiert und geschlossen.

Beim Auswerfen bzw. Entformen des Gussteiles aus der erfindungsgemäßen Gussform können unterstützend Werkzeugschieber zum Einsatz kommen, besonders im Bereich von Hinterschnitten.

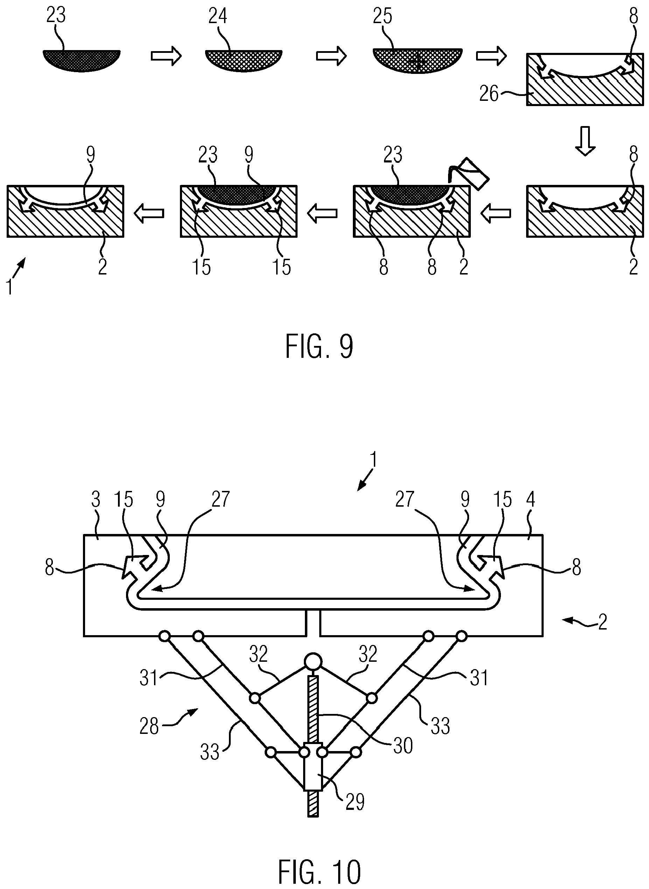

Figur 9 zeigt den schematischen Ablauf einer Ausführungsform eines erfindungsgemäßen Verfahrens zum Herstellen einer Gussform. Zunächst wird ein physisches Urmodell 23 bereitgestellt, das beispielsweise aus Hartschaum modelliert werden kann. Das physische Urmodell 23 wird dann gescannt, um ein digitales Urmodell 24 zu erzeugen.

Alternativ kann das Verfahren auch direkt mit einem digitalen Urmodell 24 begonnen werden.

Die Form des digitalen Urmodells 24 wird dann zumindest in einem Oberflächenbereich variiert. Insbesondere wird ein Offset auf den unteren Oberflächenbereich in Richtung der Oberflächennormalen addiert. Auf Basis dieser Daten wird ein physisches Negativmodell 25 gefertigt, mit dem durch Abformen eine Schalung 2 erzeugt werden kann. Alternativ kann ein digitales Schalungsmodell 26 auch direkt aus dem digitalen Negativmodell 25 berechnet werden. In dem digitalen Schalungsmodell 26 können Geometrien für Befestigungsbereiche 8 ergänzt werden.

Dann wird eine Schalung 2 durch ein generatives Fertigungsverfahren auf Basis der Daten des Schalungsmodells 26 hergestellt. Das physische Urmodell 23 wird in der Schalung 2 angeordnet, und der Zwischenraum wird mit einem elastischen Material in flüssiger Form aufgefüllt, das nach Aushärten die elastische Trennschicht 9 bildet. Insbesondere fließt das elastische Material in flüssiger Form in die Befestigungsbereiche 8 der Schalung 2 und härtet dort zu Befestigungsbereichen 15 der elastischen Trennschicht 9 aus.

Das physische Urmodell 23 wird daraufhin entnommen, und somit ist die Gussform 1 fertiggestellt.

Eine Teilung der Schalung 2 in mehrere Schalungsteile kann zu unterschiedlichen Schritten des Verfahrens erfolgen. So ist es beispielsweise möglich, dass bereits das digitale Schalungsmodell 26 geteilt ist und entsprechend die Schalung 2 bereits mehrteilig hergestellt wird. Andererseits ist es aber auch möglich, die Schalung 2 vor dem Befüllen mit elastischen Materialien in flüssiger Form zu teilen oder aber erst, wenn die elastische Trennschicht 9 bereits ausgehärtet ist.

In Figur 10 ist eine weitere Ausführungsform der erfindungsgemäßen Gussform 1 dargestellt. Wiederum sind wenigstens zwei relativ zueinander bewegliche Schalungsteile 3, 4 einer Schalung 2 vorgesehen, in deren Befestigungsbereichen 8 Trennschichtbefestigungsbereiche 15 einer elastischen Trennschicht 9 befestigt sind. Die durch die elastische Trennschicht 9 bereitgestellte Negativform für ein Gussteil weist hinterschnittene Bereiche 27 auf. Durch die relative Beweglichkeit der Schalungsteile 3, 4 zueinander kann die in den Schalungsteilen 3, 4 befestigte elastische Trennschicht 9 aufgeweitet werden und somit ein vorteilhaftes Entformen, insbesondere in den hinterschnittenen Bereichen 27, ermöglicht werden.

Für die Relativbewegung der Schalungsteile 3, 4 zueinander, ist ein Gelenkgetriebe 28 vorgesehen. Das Gelenkgetriebe 28 weist einen Schlitten 29 auf, der mittels eines Linearantriebs vertikal verfahren werden kann. Ein erster Schenkel 31 ist mit seinem ersten Ende schwenkbar in dem Schlitten 29, und mit seinem zweiten Ende schwenkbar in dem Schalungsteil 3 bzw. 4 gelagert. Das zweite Ende des ersten Schenkels 31 bildet somit einen Befestigungspunkt für das Schalungsteil 3, 4, wobei die Lagerung hier bzw. durch vorübergehendes Einhaken lösbar gestaltet sein kann, um das Schalungsteil 3, 4 einfach entnehmen zu können. Ein zweiter Schenkel 32 ist an einem ersten Ende ortsfest schwenkbar gelagert, und an seinem zweiten Ende im ersten Schenkel 31. Die Lagerung des zweiten Schenkels 32 im ersten Schenkel 31 liegt insbesondere in einem inneren Bereich des ersten Schenkels 31 zwischen dessen jeweiligen Enden, sodass insbesondere ein Kniehebelgetriebe gebildet wird.

Weiterhin kann ein dritter Schenkel 33 vorgesehen sein, der neben dem ersten Schenkel 31 schwenkbar gelagert ist. Der dritte Schenkel 33 erstreckt sich insbesondere parallel zum ersten Schenkel 31 und ist mit seinem ersten Ende im Schlitten 29 gelagert und mit seinem zweiten Ende an dem Schalungsteil 3 bzw. 4, insbesondere lösbar, gelagert, so dass er mit dem ersten Schenkel 31 ein Parallelogramm bildet. Das zweite Ende des dritten Schenkels 33 bildet einen weiteren Befestigungspunkt für das Schalungsteil 3, 4. Somit wird eine rein translatorische, kinematische bestimmte Bewegung der Schalungsteile 3, 4 durch das Gelenkgetriebe 28 ermöglicht

## Patentansprüche

1. Gussform (1), umfassend
eine elastische Trennschicht (9), deren Innenseite ein Negativ wenigstens eines Bereichs einer äußeren Form eines Gussteils (17) bereitstellt,
**gekennzeichnet durch**
eine Schalung (2) mit mehreren relativ zueinander beweglichen Schalungsteilen (3, 4, 5, 6), wobei die elastische Trennschicht (9) an wenigstens zwei der Schalungsteilen (3, 4, 5, 6) befestigt ist, wobei die Schalungsteile (3, 4, 5, 6) in einer ersten Anordnung die Außenseite der elastischen Trennschicht (9) stützen, und
wobei die Schalungsteile (3, 4, 5, 6) in einer zweiten Anordnung ein Auswerfen des Gussteils (17) ermöglichen.

2. Gussform gemäß Anspruch 1, wobei die Schalungsteile (3, 4, 5, 6) in der ersten Anordnung näher zueinander angeordnet sind als in der zweiten Anordnung.

3. Gussform gemäß Anspruch 1 oder 2, wobei die elastische Trennschicht (9) aus Silikon, Gelatine, Naturkautschuk, Ethylen-Propylen-Dien-Kautschuk, Chloropren-Kautschuk oder Styrol-Butadien-Kautschuk besteht.

4. Gussform gemäß einem der vorangehenden Ansprüche, umfassend ein Getriebe oder Fördermittel (18), mit dem die Schalungsteile (3, 4, 5, 6) an jeweils unterschiedlichen Befestigungspunkten wenigstens temporär verbunden sind, sodass bei einer Veränderung der relativen Anordnung oder Orientierung der Befestigungspunkte ein relatives Bewegen der Schalungsteile (3, 4, 5, 6) bewirkt wird.

5. Gussform gemäß Anspruch 4, wobei das Getriebe ein Gelenkgetriebe ist.

6. Gussform gemäß einem der vorangehenden Ansprüche, wobei die elastische Trennschicht (9) wenigstens einen Trennschichtbefestigungsbereich (15) aufweist, der formschlüssig in wenigstens einem der Schalungsteile (3, 4, 5, 6) befestigt ist.

7. Gussform gemäß einem der vorangehenden Ansprüche, wobei die Trennschicht (9) einen umlaufenden Trennschichtbefestigungsbereich (15) aufweist.

8. Gussform gemäß einem der vorangehenden Ansprüche, weiterhin umfassend einen Deckel (10), der auf der Schalung (2) anordenbar ist, um die Gussform (1) zu schließen.

9. Verfahren zum Herstellen einer Gussform (1), umfassend die Schritte:
(i) Anordnen eines physischen Urmodells (23) in einer Schalung (2),
(ii) Auffüllen eines Hohlraums zwischen der Schalung (2) und dem physischen Urmodell (23) mit einem elastischen Material in flüssiger Form, und
(iii) Aushärten des elastischen Materials zu einer elastischen Trennschicht (9), wobei die elastische Trennschicht (9) und die Schalung (2) miteinander verbunden werden.

10. Verfahren nach Anspruch 9, wobei ein digitales Schalungsmodell (26) in Abhängigkeit von den Geometriedaten des Urmodells (23) berechnet wird, und die Schalung (2) durch ein generatives Fertigungsverfahren hergestellt wird.

11. Verfahren nach Anspruch 9 oder 10, wobei die Schalung (2) mehrteilig hergestellt oder nach Herstellung in mehrere Schalungsteile (3, 4, 5, 6) zerteilt wird.

12. Verfahren nach einem der Ansprüche 9 bis 11, wobei das elastische Material beim Auffüllen des Hohlraums in Schritt (ii) in einen, insbesondere als Hinterschnitt ausgeformten, Befestigungsbereich (8) der Schalung (2) fließt.

13. Verfahren zum Herstellen eines Gussteils (17), umfassend die Schritte:
(i) Befüllen einer wenigstens bereichsweise durch eine elastische Trennschicht (9) gebildeten Gussform (1) mit einem flüssigen Gusswerkstoff, wobei die Trennschicht (9) zumindest bereichsweise durch Schalungsteile (3, 4, 5, 6) einer Schalung (2) gestützt wird,
(ii) Aushärten des Gusswerkstoffs,
(iii) Relatives Bewegen der Schalungsteile (3, 4, 5, 6) zueinander zur elastischen Verformung der elastischen Trennschicht (9),
(iv) Entnahme des aus dem ausgehärteten Gusswerkstoff geformten Gussteils (17).

14. Verfahren nach Anspruch 13, wobei die Schalungsteile (3, 4, 5, 6) in Schritt (iii) relativ zueinander translatorisch bewegt werden.

15. Verfahren nach Anspruch 13 oder 14, wobei die Schalungsteile (3, 4, 5, 6) in Schritt (iii) relativ zueinander verdreht werden.
